# EUROPEAN PATENT APPLICATION

(11) **EP 1 605 166 A1**
(43) Date of publication of application: **14.12.2005**
(21) Application number: 04253458.6
(22) Date of filing: 10.06.2004
(51) Int. Cl.: F04B 49/03, F16K 17/04

(54) **Relief valve for a hydraulic pump**

(71) Applicant: JI-EE Industry Co., Ltd., Yungkang City, Tainan Hsien (TW)
(72) Inventor: Wang, Chin-Tang, Tainan City (TW)
(74) Representative: Hague, Alison Jane

(57) **Abstract**

A relief valve (3) for a hydraulic pump (2) includes a valve housing (31) defining an inlet (34) and first and second valve openings (35, 36), an urging member (4) mounted in the valve housing (31), a first valve piece (7) adapted to close the first valve opening (35), defining a fluid channel (74) therein, and movable against urging action of the urging member (4) to a relief position to permit fluid communication between the inlet (34) and the first valve opening (35), and a second valve piece (6) for closing and opening the fluid channel (74). The second valve piece (6) is movable away from the first valve piece (7) to permit fluid communication between the fluid channel (74) and the second valve opening (36) when the pressure in the hydraulic pump (2) exceeds a predetermined value under a state where the first valve piece (7) is stuck during movement to the relief position.

## Description

This invention relates to a relief valve for a hydraulic pump, more particularly to a relief valve having first and second valve openings and first and second valve pieces respectively and releasably closing the first and second valve openings.

A conventional relief valve for a hydraulic pump normally has a shell with an inlet and an outlet, a toothed outer rotor disposed in the shell, and a toothed inner rotor that meshes and that cooperates with the outer rotor to define a chamber therebetween. Rotation of the outer rotor results in rotation of the inner rotor and compression of hydraulic fluid in the chamber. In use, hydraulic oil supplied from an oil supply is introduced into the chamber through the inlet, is compressed by co-rotation of the outer and inner rotors and is discharged at the outlet to a desired machine. The relief valve is mounted on the shell, and includes a valve housing formed with a valve opening and a fluid inlet in fluid communication with the chamber in the shell, a mounting seat disposed in the valve housing, an urging member mounted on the mounting seat within the valve housing, and a valve piece disposed movably in the valve housing and urged by the urging member to abut against a periphery of the valve opening and to close the valve opening at a normal position. When the pressure in the chamber in the shell exceeds a predetermined value, the valve piece is pushed by the hydraulic oil in the chamber to move against urging action of the urging member away from the valve opening to a relief position, in which, the valve opening is no longer closed by the valve piece, thereby permitting fluid communication between the chamber and the valve opening and lowering of the pressure in the chamber.

The conventional relief valve is disadvantageous in that the relief valve can no longer function for relieving the pressure in the chamber when the valve piece is stuck due to poor quality of the hydraulic oil during movement of the same to the relief position.

The object of the present invention is to provide a relief valve that is capable of overcoming the aforesaid drawback of the prior art.

According to this invention, a relief valve for a hydraulic pump comprises: a valve housing that defines a valve chamber therein, that has opposite upper and lower ends, and that is formed with a fluid inlet disposed adjacent to the upper end and in fluid communication with the valve chamber, a first valve opening disposed downstream of the fluid inlet and in fluid communication with the valve chamber, and a second valve opening disposed downstream of the first valve opening and in fluid communication with the valve chamber, the first valve opening having an upper end; an urging member mounted in the valve chamber and abutting against the lower end of the valve housing; a first valve piece disposed movably in the valve chamber, urged by the urging member, having upper and lower ends, and formed with a fluid channel that has an inlet end defined by the upper end of the first valve piece and in fluid communication with the fluid inlet in the valve housing, and an outlet end defined by the lower end of the first valve piece, disposed between the first and second valve openings, and in fluid communication with the valve chamber, the first valve piece being moved relative to the valve housing in a downward direction against urging action of the urging member from a normal position, in which the upper end of the first valve piece is disposed above the upper end of the first valve opening and in which the first valve opening is releasably closed by the first valve piece so as to block fluid communication with the valve chamber, to a relief position, in which the upper end of the first valve piece is disposed below the upper end of the first valve opening to permit fluid communicat ion between the first valve opening and the fluid inlet through the valve chamber, when the pressure in the hydraulic pump exceeds a first predetermined value, the first valve piece being restored to the normal position by urging action of the urging member when the pressure in the hydraulic pump is reduced to a value below the first predetermined value; and a second valve piece disposed movably between the urging member and the first valve piece and urged by the urging member to abut tightly against the lower end of the first valve piece so as to be co-movable with the first valve piece relative to the valve housing and so as to close releasably the outlet end of the fluid channel in the first valve piece, thereby preventing fluid communication between the second valve opening and the fluid channel. The second valve piece is moved in the downward direction relative to the first valve piece away from the lower end of the first valve piece against urging action of the urging member when the pressure in the hydraulic pump exceeds a second predetermined value greater than the first predetermined value under a state where the firstvalvepiece is stuck during movement from the normal position to the relief position, thereby permitting fluid communication between the fluid channel and the second valve opening through the valve chamber.

Other features and advantages of the present invention will become apparent in the following detailed description of the preferred embodiment of the invention, with reference to the accompanying drawing, in which:
Fig. 1 is a fragmentary sectional view of the preferred embodiment of a relief valve on a hydraulic pump according to this invention to illustrate a state where first and second valve openings are releasably and respectively closed by first and second valve pieces;
Fig. 2 is a fragmentary sectional view of the preferred embodiment to illustrate a state where the first valve opening is no longer closed by the first valve piece and where the second valve opening is closed by the second valve piece; and
Fig. 3 is fragmentary sectional view of the preferred embodiment to illustrate a state where the first valve opening is closed by the first valve piece and where the second valve opening is no longer closed by the second valve piece.

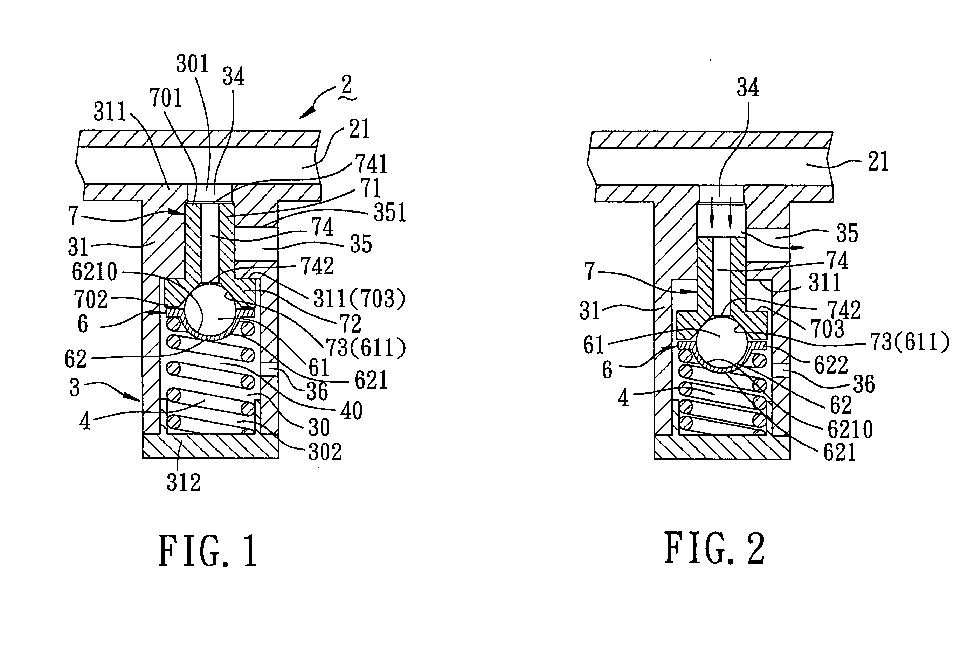

Figs. 1 to 3 illustrate the preferred embodiment of a relief valve 3 according to this invention for a hydraulic pump 2.

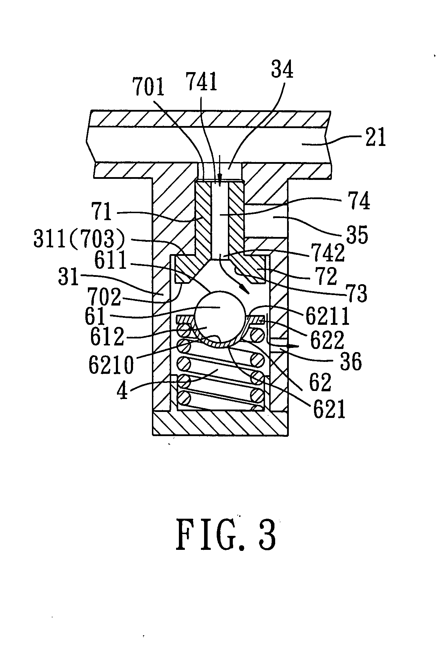

The relief valve 3 includes: a valve housing 31 that defines a valve chamber 30 therein, that has opposite upper and lower ends 311, 312, and that is formed with a fluid inlet 34 disposed adjacent to the upper end 311 and in fluid communication with the valve chamber 30 and an oil passage 21 in the hydraulic pump 2, a first valve opening 35 disposed downstream of the fluid inlet 34 and in fluid communication with the valve chamber 30, and a second valve opening 36 disposed downstream of the first valve opening 35 and in fluid communication with the valve chamber 30, the first valve opening 35 having an upper end 351; an urging member 4 mounted in the valve chamber 30 and abutting against the lower end 312 of the valve housing 31; a first valve piece 7 disposed movably in the valve chamber 30, urged by the urging member 4, having upper and lower ends 701, 702, and formed with a fluid channel 74 that has an inlet end 741 defined by the upper end 701 of the first valve piece 7 and in fluid communication with the fluid inlet 34 in the valve housing 31, and an outlet end 742 defined by the lower end 702 of the first valve piece 7, disposed between the first and second valve openings 35, 36, and in fluid communication with the valve chamber 30, the first valve piece 7 being moved relative to the valve housing 31 in a downward direction against urging action of the urging member 4 from a normal position (see Fig. 1), in which the upper end 701 of the first valve piece 7 is disposed above the upper end 351 of the first valve opening 35 and in which the first valve opening 35 is releasably closed by the first valve piece 7 so as to block fluid communication with the valve chamber 30, to a relief position (see Fig. 2), in which the upper end 701 of the first valve piece 7 is disposed below the upper end 351 of the first valve opening 35 to permit fluid communication between the first valve opening 35 and the fluid inlet 34 through the valve chamber 30, when the pressure in the hydraulic pump 2 exceeds a first predetermined value, the first valve piece 7 being restored to the normal position by urging action of the urging member 4 when the pressure in the hydraulic pump 2 is reduced to a value below the first predetermined value; and a second valve piece 6 disposed movably between the urging member 4 and the first valve piece 7 and urged by the urging member 4 to abut tightly against the lower end 702 of the first valve piece 7 so as to be co-movable with the first valve piece 7 relative to the valve housing 31 and so as to close releasably the outlet end 742 of the fluid channel 74 in the first valve piece 7 (see Figs. 1 and 2), thereby preventing fluid communication between the second valve opening 36 and the fluid channel 74. The second valve piece 6 is moved in the downward direction relative to the first valve piece 7 away from the lower end 702 of the first valve piece 7 against urging action of the urging member 4 when the pressure in the hydraulic pump 2 exceeds a second predetermined value greater than the first predetermined value under a state where the first valve piece 7 is stuck (see Fig. 3) during movement from the normal position to the relief position, thereby permitting fluid communication between the fluid channel 74 and the second valve opening 36 through the valve chamber 30. Thesecond valve piece 6 is restored to its normal position when the pressure in the hydraulic pump 2 is reduced to a value below the second predetermined value.

In this embodiment, the first valve piece 7 has a curved recessed surface 73 indented inwardly from the lower end 702 of the first valve piece 7 and disposed around the outlet end 742 of the fluid channel 74. The second valve piece 6 includes a ball 61 that has an outer spherical surface with a contact portion 611 conforming to and abutting against the recessed surface 73 of the first valve piece 7 by urging action of the urging member 4 for closing the outlet end 742 of the fluid channel 74.

The urging member 4 includes a compression spring that defines an inner space 40 therein. The second valve piece 6 further includes a ball holder 62 that has a bowl-shaped part 621 protruding into the inner space 40 in the compression spring, having an annular end edge 6211 (see Fig. 3), and defining a recessed inner surface 6210, and an annular flange part 622 extending radially and outwardly from the end edge 6211 of the bowl-shaped part 621 and anchored on the compression spring. The ball 61 has a lower portion 612 received fittingly in the recessed inner surface 6210 of the bowl-shaped part 621.

The valve chamber 30 has a cylindrical upper section 301 and a cylindrical lower section 302 enlarged from the upper section 301. The first and second valve openings 35, 36 are respectively in spatial communication with the upper and lower sections 301, 302 of the valve chamber 30. The first valve piece 7 has a cylindrical upper segment 71 received movably in the upper section 301 of the valve chamber 30 and closing the first valve opening 35 when the first valve piece 7 is disposed at the normal position, and a cylindrical lower segment 72 enlarged from the upper segment 71, received movably in the lower section 302 of the valve chamber 30, and defining the recessed surface 73 of the first valve piece 7. The valve housing 31 defines an annular neck 311 between the upper and lower sections 301, 302 of the valve chamber 30. The upper and lower segments 71, 72 of the firstvalvepiece 7 cooperatively define an annular shoulder 703 therebetween. The shoulder 703 abuts against the neck 311 of the valve housing 31 by urging action of the urging member 4 when the first valve piece 7 is disposed at the normal position.

With the inclusion of the second valve piece 6 in the relief valve 3 of this invention for closing and opening the outlet end 742 of the fluid channel 74 in the first valve piece 7, the aforesaid drawback associated with the prior art can be eliminated.

## Claims

1. A relief valve (3) for a hydraulic pump (2) **characterized by**:
a valve housing (31) that defines a valve chamber (30) therein, that has opposite upper and lower ends (311, 312), and that is formed with a fluid inlet (34) disposed adjacent to said upper end (311) and in fluid communication with saidvalve chamber (30), a first valve opening (35) disposed downstream of said fluid inlet (34) and in fluid communication with said valve chamber (30), and a second valve opening (36) disposed downstream of said first valve opening (35) and in fluid communication with said valve chamber (30), said first valve opening (35) having an upper end (351) ;
an urging member (4) mounted in said valve chamber (30) and abutting against said lower end (312) of said valve housing (31);
a first valve piece (7) disposed movably in said valve chamber (30), urged by said urging member (4), having upper and lower ends (701, 702), and formed with a fluid channel (74) that has an inlet end (741) defined by said upper end (701) ofsaidfirstvalvepiece (7) andinfluidcommunication with said fluid inlet (34) in said valve housing (31), and an outlet end (742) defined by said lower end (702) of said first valve piece (7), disposed between said first and second valve openings (35, 36), and in fluid communication with said valve chamber (30), said first valve piece (7) being moved relative to said valve housing (31) in a downward direction against urging action of said urging member (4) from a normal position, in which said upper end (701) of said first valve piece (7) is disposed above said upper end (351) of said first valve opening (35) and in which said first valve opening (35) is releasably closed by said first valve piece (7) so as to block fluid communication with said valve chamber (30), to a relief position, in which saidupperend (701) of said first valve piece (7) is disposed below said upper end (351) of said first valve opening (35) to permit fluid communication between said first valve opening (35) and said fluid inlet (34) through said valve chamber (30), when the pressure in the hydraulic pump (2) exceeds a first predetermined value, said first valve piece (7) being restored to said normal position by urging action of said urging member (4) when the pressure in the hydraulic pump (2) is reduced to a value below said first predetermined value; and
a second valve piece (6) disposed movably between said urging member (4) and said first valve piece (7) and urged by said urging member (4) to abut tightly against said lower end (702) of said first valve piece (7) so as to be co-movable withsaidfirstvalvepiece (7) relativetosaidvalvehousing (31) and so as to close releasably said outlet end (742) of said fluid channel (74) in said first valve piece (7), thereby preventing fluid communication between said second valve opening (36) and said fluid channel (74), said second valve piece (6) being moved in said downward direction relative to said first valve piece (7) away from said lower end (742) of said first valve piece (7) against urging action of said urging member (4) when the pressure in the hydraulic pump (2) exceeds a second predetermined value greater than said first predetermined value under a state where said first valve piece (7) is stuck during movement from said normal position to said relief position, thereby permitting fluid communication between said fluid channel (74) and said second valve opening (36) through said valve chamber (30).

2. The relief valve (3) of claim 1, **characterized in that** said first valve piece (7) has a curved recessed surface (73) indented inwardly from said lower end (702) of said first valve piece (7) and disposed around said outlet end (742) of said fluid channel (74), said second valve piece (6) including a ball (61) that has an outer spherical surface with a contact portion (611) conforming to and abutting against said recessed surface (73) of said first valve piece (7) by urging action of said urging member (4) for closing said outlet end (742) of said fluid channel (74).

3. The relief valve (3) of claim 2, further **characterized in that** said urging member (4) includes a compression spring that defines an inner space (40) therein, said second valve piece (6) further including a ball holder (62) that has a bowl-shaped part (621) protruding into said inner space (40) in said compression spring, having an annular end edge (6211), and defining a recessed inner surface (6210), and an annular flange part (622) extending radially and outwardly from said end edge (6211) of said bowl-shaped part (622) and anchored on said compression spring, said ball (61) having a lower portion (612) received fittingly in said recessed inner surface (6210) of said bowl-shaped part (622).

4. The relief valve (3) of claim 3, further **characterized in that** said valve chamber (30) has a cylindrical upper section (301) and a cylindrical lower section (302) enlarged from said upper section (301), said first and second valve openings (35, 36) being respectively in spatial communication with said upper and lower sections (301, 302) of said valve chamber (30), said first valve piece (7) having a cylindrical upper segment (71) received movably in said upper section (301) of said valve chamber (30) and closing said first valve opening (35) when said first valve piece (7) is disposed at said normal position, andacylindricallowersegment (72) enlarged from said upper segment (71), received movably in said lower section (302) of said valve chamber (30), and defining said recessed surface (73) of said first valve piece (7), said valve housing (31) defining an annular neck (311) between said upper and lower sections (301, 302) of said valve chamber (30), said upper and lower segments (71, 72) of said first valve piece (7) cooperatively defining an annular shoulder (703) therebetween, said shoulder (703) abutting against said neck (311) of said valve housing (31) by urging action of said urging member (4) when said first valve piece (7) is disposed at said normal position.
